# EUROPÄISCHE PATENTANMELDUNG

(11) **EP 4 447 284 A1**
(43) Veröffentlichungstag der Anmeldung: **16.10.2024**
(21) Anmeldenummer: 23167514.1
(22) Anmeldetag: 12.04.2023
(51) Int. Cl.: H02K 3/38, H02K 3/52

(54) **STATOR MIT EINER SCHUTZVORRICHTUNG**

(71) Anmelder: Hilti Aktiengesellschaft, 9494 Schaan (LI)
(72) Erfinder: Unsöld, Michael, 86929 Penzing (DE); Landes, Thomas, 86944 Unterdiessen (DE); Hurka, Florian, 86459 Margertshausen (DE); Schaefer, Thomas, 86836 Obermeitingen (DE); Jakob, Manfred, 86916 Kaufering (DE)
(74) Vertreter: Hilti Aktiengesellschaft Corporate Intellectual Property

(57) **Zusammenfassung**

Stator, insbesondere für einen Elektromotor, enthaltend ein Blechpaket und Spulenwicklungen mit einzelnen Drahtenden mit einer Schutzvorrichtung, die in radialer Anordnung um die Drahtenden mit einem ersten Ende des Stators verbindbar ist.

## Beschreibung

Die vorliegende Erfindung betrifft einen Stator, insbesondere für einen Elektromotor, enthaltend ein Statorblechpaket und Spulen mit einzelnen Drahtenden.

Des Weiteren betrifft die Erfindung einen Elektromotor mit einem Stator.

Darüber hinaus betrifft die Erfindung eine Werkzeugmaschine mit einem Stator.

Ein Elektromotor besteht für gewöhnlich und im Wesentlichen aus einem stationären Stator und einen relativ zum Stator beweglichen Rotor.

Der Stator verfügt über eine Anzahl an Polzähnen, um die jeweils ein Wickeldraht zum Erzeugen einer Wickelspule gewickelt ist. Mit Hilfe der Wickelspulen kann ein Magnetfeld erzeugt werden, durch welches der Rotor in Rotation versetzt werden kann. Die freien Enden des Wickeldrahts jeder Wickelspule dienen zur Kontaktierung mit einem Verschaltungsring (auch Verschaltring genannt) verbunden. Darüber hinaus ragen die freien Ende des Wickeldrahts über ein Ende des Stators heraus.

Die Verwendung in Werkzeugmaschinen stellt oftmals eine hohe mechanische Belastung für den Elektromotor dar. Dadurch, dass die Werkzeugmaschinen häufig Stürzen, Stößen oder anderen Misshandlungen ausgesetzt werden, kann es zu unterschiedlichen Beschädigungen am Elektromotor oder einzelnen Komponenten des Elektromotors kommen.

Problematisch ist hierbei oftmals, dass die freien Enden des Wickeldrahts besonders empfindlich auf die mechanischen Belastungen reagieren und durch diese beschädigt werden können.

Aufgabe der vorliegenden Erfindung ist das vorstehend beschriebene Problem zu lösen.

Die Aufgabe wird ebenfalls gelöst durch den Gegenstand des Anspruchs 1, 6 und 7. Weitere vorteilhafte Ausführungen der Erfindung sind in den entsprechenden Unteransprüchen beschrieben.

Die Aufgabe wird insbesondere gelöst durch einen Stator, insbesondere für einen Elektromotor, enthaltend ein Statorblechpaket und Spulen mit einzelnen Drahtenden.

Erfindungsgemäß ist eine Schutzvorrichtung vorgesehen, die in radialer Anordnung um die Drahtenden mit einem ersten Ende des Stators verbindbar ist.

Hierdurch kann auf einfache Art und Weise ein effektiver Schutz für die Drahtenden erzeugt werden.

Es ist dabei möglich, dass die Schutzvorrichtung ringförmig ausgebildet ist. Hierdurch kann die Schutzvorrichtung passend an dem Stator positioniert werden.

Entsprechend einem vorteilhaften Ausführungsbeispiel kann es möglich sein, dass die Schutzvorrichtung mehrteilig ausgestaltet ist. Hierdurch kann auf einfache Art und Weise mögliche Fertigungstoleranzen des Stators ausgeglichen werden. Die einzelnen Teile der Schutzvorrichtung muss dadurch nicht als perfekter Kreis an dem Stator angeordnet sein.

Gemäß einem weiteren vorteilhaften Ausführungsbeispiel kann es möglich sein, dass die Schutzvorrichtung wenigstens eine taschenförmige Einbuchtung zum Aufnehmen der Drahtenden enthält.

Entsprechend einem vorteilhaften Ausführungsbeispiel kann es möglich sein, dass die Schutzvorrichtung eine Verbindungseinrichtung zum wiederlösbaren Verbinden der Schutzvorrichtung mit dem ersten Ende des Stators enthält.

Gemäß einem weiteren vorteilhaften Ausführungsbeispiel kann es möglich sein, dass die Schutzvorrichtung wenigstens eine axiale Aussparung enthält zum Aufnehmen und Halten eines Lagerbocks.

Entsprechend einem vorteilhaften Ausführungsbeispiel kann es möglich sein, dass die Einbuchtung mehrteilig ausgestaltet ist. Hierdurch können Fertigungstoleranzen ausgeglichen und die Menge an Isoliermasse oder Klebstoff, der in die Einbuchtungen eingeführt werden kann, individuell angepasst werden.

Die Aufgabe wird insbesondere gelöst durch einen Elektromotor mit einem Stator.

Die Aufgabe wird insbesondere gelöst durch eine Werkzeugmaschine mit einem Stator.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:
- Figur 1: eine Seitenansicht auf eine Werkzeugmaschine mit einem Elektromotor;
- Figur 2: eine perspektivische Ansicht auf einen Elektromotor mit einem Stator und einer Schutzvorrichtung gemäß einer ersten Ausführungsform in einem montierten Zustand;
- Figur 3: eine perspektivische Ansicht auf den Elektromotor mit dem Stator und der Schutzvorrichtung gemäß der ersten Ausführungsform in einem demontierten Zustand;
- Figur 4: perspektivische Ansicht auf die Schutzvorrichtung gemäß der ersten Ausführungsform;
- Figur 4a: perspektivische Ansicht auf die Schutzvorrichtung gemäß einer mehrteiligen Ausführungsform;

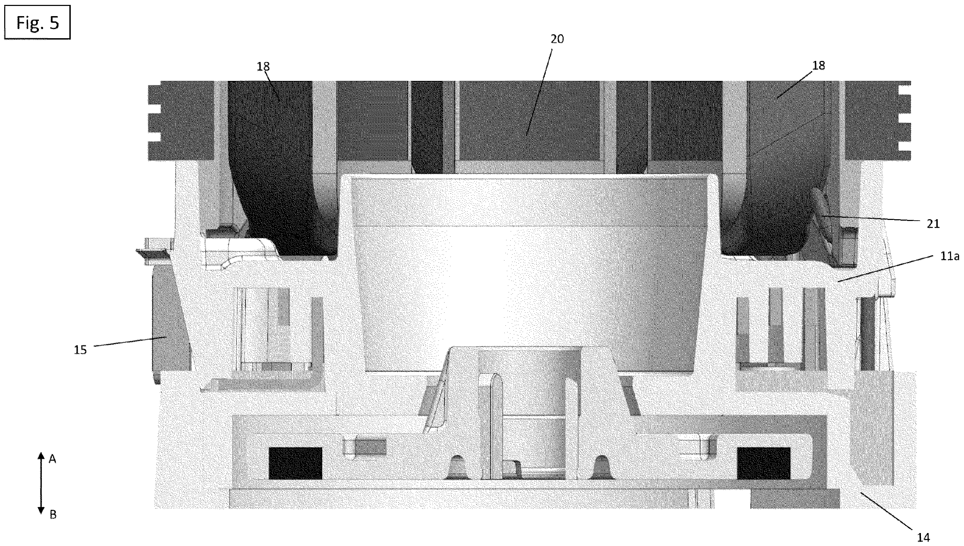

- Figur 5: eine Schnittansicht durch ein erstes Ende des Elektromotors und die Schutzvorrichtung gemäß der ersten Ausführungsform;

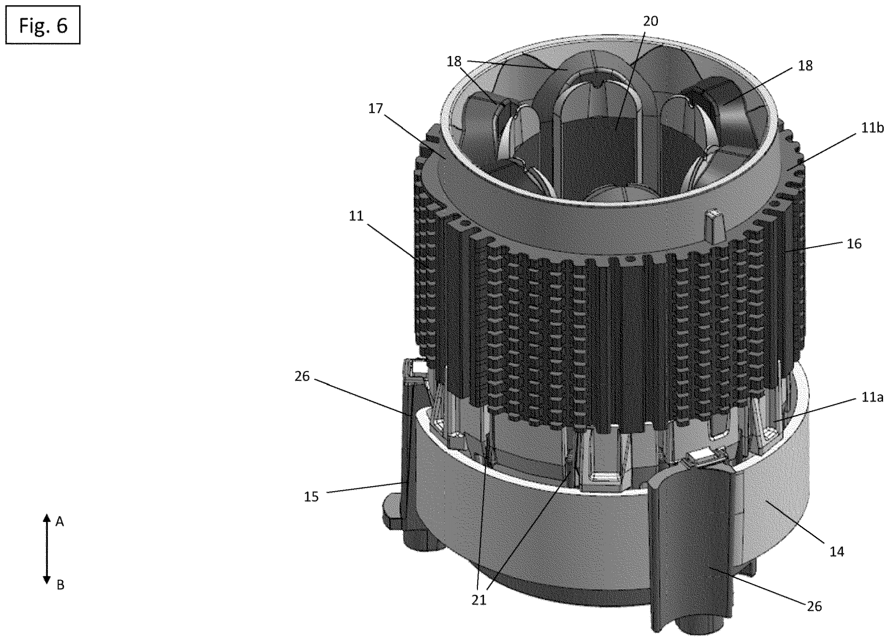

- Figur 6: eine perspektivische Ansicht auf den Elektromotor mit dem Stator und einer Schutzvorrichtung gemäß einer zweiten Ausführungsform in einem montierten Zustand;
- Figur 7: eine perspektivische Ansicht auf den Elektromotor mit dem Stator und der Schutzvorrichtung gemäß der zweiten Ausführungsform in einem demontierten Zustand;
- Figur 8: perspektivische Ansicht auf die Schutzvorrichtung gemäß der zweiten Ausführungsform;

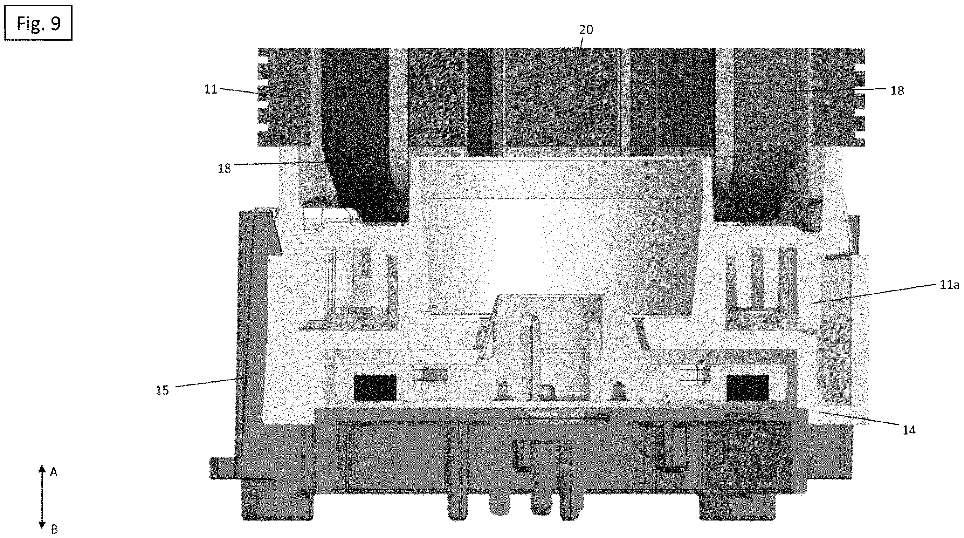

- Figur 9: eine Schnittansicht durch ein erstes Ende des Elektromotors und die Schutzvorrichtung gemäß der zweiten Ausführungsform;
- Figur 10: eine perspektivische Ansicht auf den Elektromotor mit dem Stator und einer Schutzvorrichtung gemäß einer dritten Ausführungsform in einem montierten Zustand;

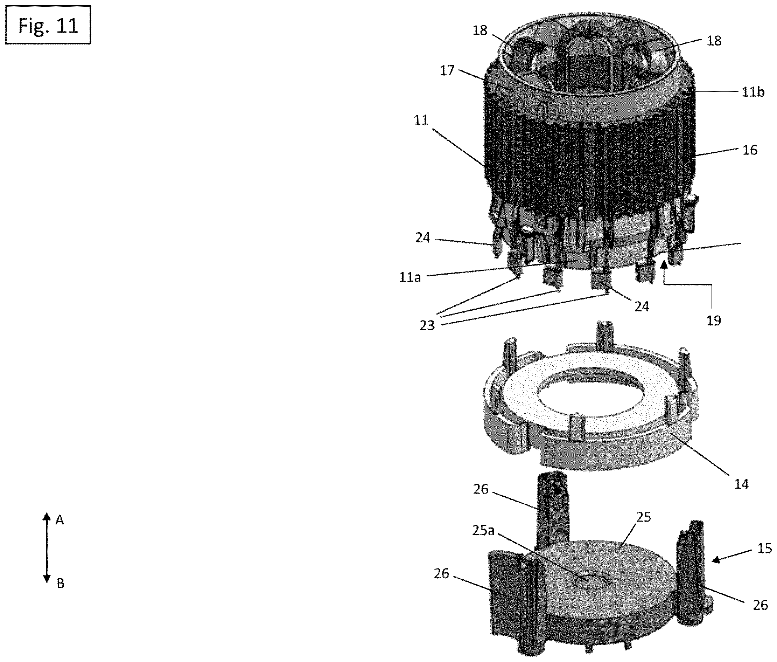

- Figur 11: eine perspektivische Ansicht auf den Elektromotor mit dem Stator und der Schutzvorrichtung gemäß der dritten Ausführungsform in einem demontierten Zustand;
- Figur 12: perspektivische Ansicht auf die Schutzvorrichtung gemäß der dritten Ausführungsform; und

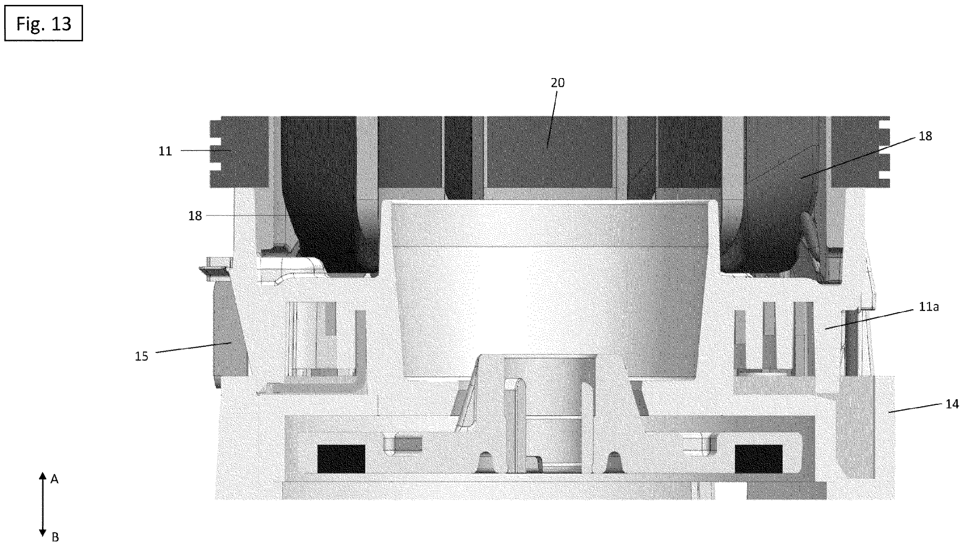

- Figur 13: eine Schnittansicht durch ein erstes Ende des Elektromotors und die Schutzvorrichtung gemäß der dritten Ausführungsform.

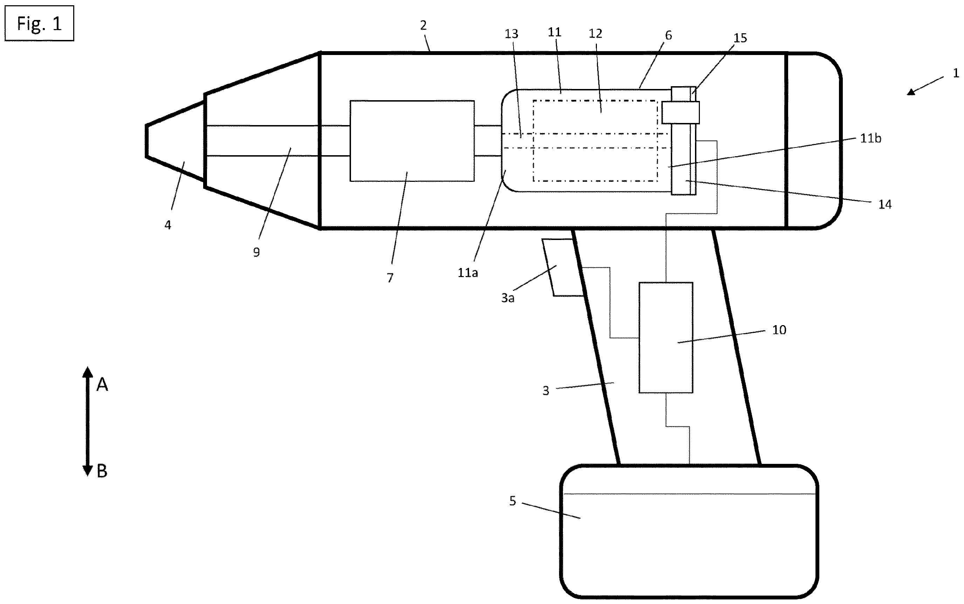

Figur 1 zeigt eine Werkzeugmaschine 1 in Ausgestaltung eines Akku-Schraubers.

Alternativ kann die Werkzeugmaschine 1 auch in Form eines Bohrhammers, eines Schleifgeräts, einer Säge oder dergleichen ausgestaltet sein.

Wie in Figur 1 angedeutet, enthält die Werkzeugmaschine 1 im Wesentlichen ein Gehäuse 2, einen Handgriff 3, eine Werkzeugaufnahme 4 sowie eine Energieversorgung 5. Im Inneren des Gehäuses 2 der Werkzeugmaschine 1 ist darüber hinaus ein Elektromotor 6, eine Getriebeeinrichtung 7, eine Abtriebswelle 9 sowie eine Steuerungseinrichtung 10 enthalten.

An einem vorderen Ende der Handgriffs 3 ist ein Betätigungsschalter 3a angeordnet, mit dem die Werkzeugmaschine 1 aktiviert werden kann.

Der Elektromotor 6 dient zum Erzeugen eines Drehmoments und ist so mit der Getriebeeinrichtung 7 verbunden, dass ein von dem Elektromotor 6 erzeugtes Drehmoment auf die Getriebeeinrichtung 7 übertragen werden kann. Von der Getriebeeinrichtung 7 wird das Drehmoment über die Abtriebswelle 9 auf die Werkzeugaufnahme 4 übertragen. Die Werkzeugaufnahme 4 dient zum Aufnehmen und Halten eines Werkzeugs. Bei dem Werkzeug kann es sich im Falle eines Akku-Schraubers um ein Schrauberbit oder Bohrer handeln.

Das Werkzeug ist in den Figuren nicht gezeigt.

Die Energieversorgung 5 ist in dem vorliegenden Ausführungsbeispiel als Akkumulator ausgestaltet. Alternativ kann die Energieversorgung 5 auch als Stromkabel zum Verbinden der Werkzeugmaschine 1 mit einer Netzstromquelle ausgestaltet sein. Das Stromkabel ist in den Figuren nicht gezeigt.

Die Steuerungseinrichtung 10 dient zum Steuern und Regeln der unterschiedlichen Funktionen der Werkzeugmaschine 1.

Der Elektromotor enthält im Wesentlichen einen Stator 11, einen Rotor 12, eine Rotorwelle 13, eine Schutzvorrichtung 14 und einen Lagerbock 15.

Der Stator 11 enthält im Wesentlichen ein Statorblechpaket 16, eine Wickelstütze 17, sechs Spulen 18 und einen Verschaltring 19.

Der Stator 11 ist zylindrisch ausgestaltet und enthält ein erstes Ende 11a sowie zweites Ende 11b. An dem ersten Ende 11a des Stators 11 ist der Verschaltring 19 und die Schutzvorrichtung 14 positioniert. Gegenüber an dem zweiten Ende 11b des Stators 11 ist die Wickelstütze 17 positioniert.

Das Statorblechpaket 16 besteht aus einzelnen Blechen, die zu einem zylindrischen StatorPaket verbunden sind. In das Innere des Blechpakets ragen radial angeordnet sechs Polzähne 20. Um jeden Polzahn 20 ist ein Wickeldraht 21 gebunden, um die Spule 18 zu erzeugen.

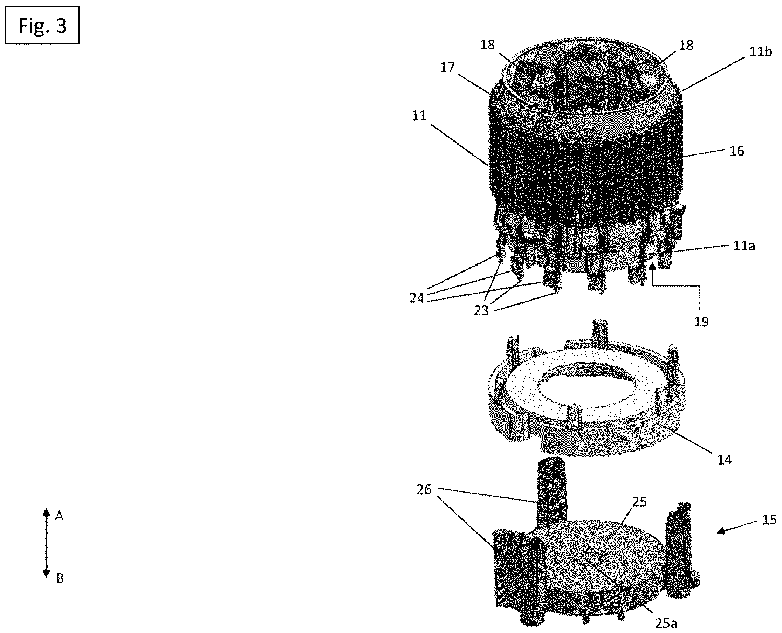

Wie in Figur 3 gezeigt, ragen die Enden 23 eines jeden Wickeldrahts 21 in Richtung B über das erste Ende 11a des Stators 11 hinaus und sind mit dem Verschaltring 19 verbunden.

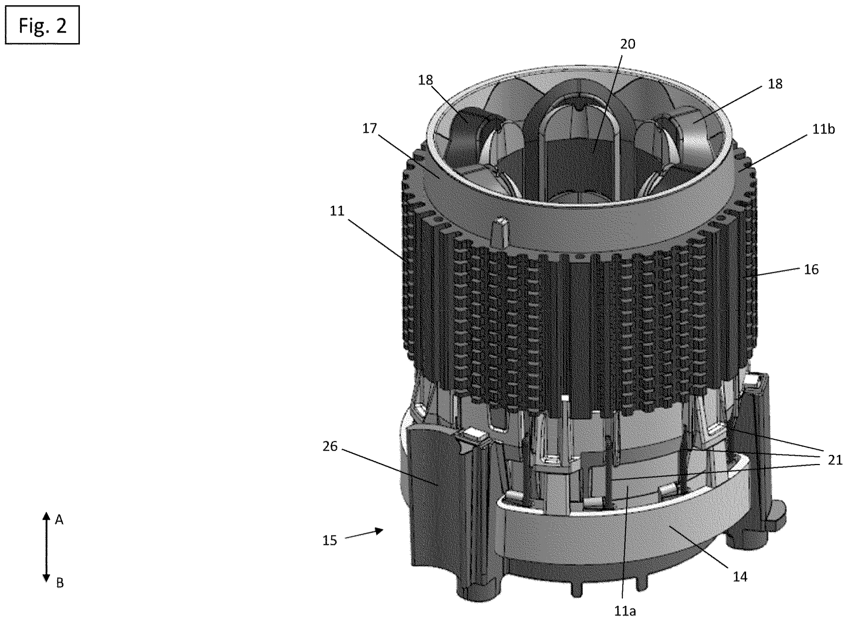

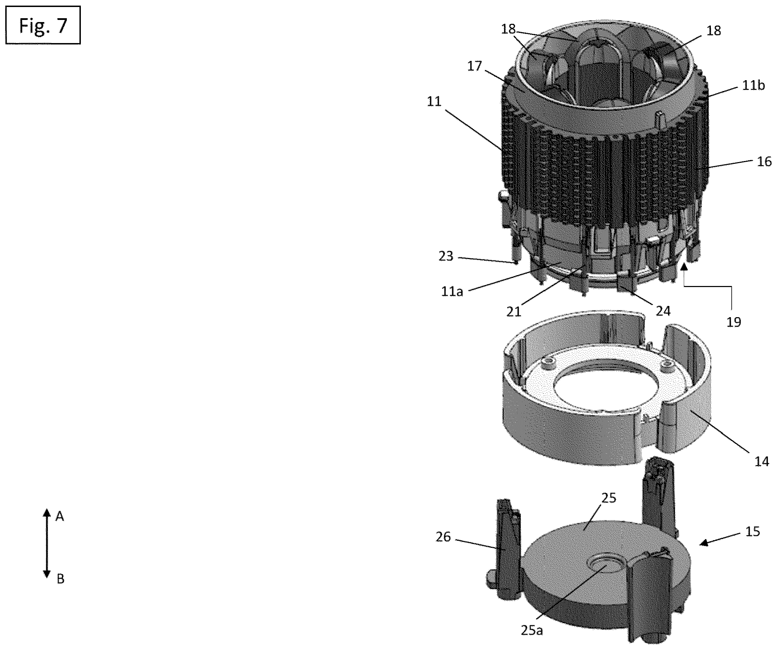

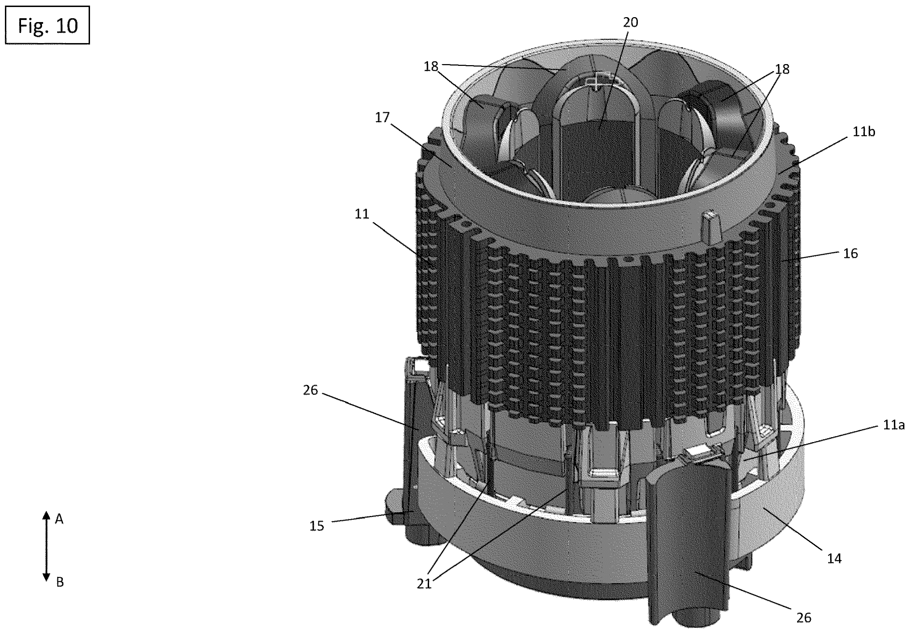

Wie in Figur 2, 7 und 10 angedeutet, ist jedes Ende 23 eines Wickeldrahts 21 durch ein Klemmelement 24 mit dem Verschaltring 19 elektrisch verbunden.

Der Rotor 12 enthält im Wesentlichen ein Rotorblechpaket und ist drehbar im Inneren des Stators 11 positioniert. Das Rotorblechpaket besteht ebenfalls aus einzelnen Blechen, die zu einem zylindrischen Paket zusammengefügt sind.

Die Rotorwelle 13 ist im Wesentlichen als länglicher Zylinder ausgestaltet und drehfest in dem Rotor 12 positioniert. Wie vorstehend erwähnt, dient die Rotorwelle 13 zum Übertragen eines Drehmoments von dem Elektromotor 6 auf die Getriebeeinrichtung 7.

Der Lagerbock 15 dient zum Lagern des Elektromotors 6 innerhalb des Gehäuses 2 der Werkzeugmaschine 1.

Wie in den Figuren gezeigt, ist der Lagerbock 15 im Wesentlichen als kreisrunde Scheibe 25 mit drei gleichmäßig beanstandenden Montageelementen 26 ausgestaltet. In der Mitte der kreisrunden Scheibe 25 ist eine Vertiefung 25a angedeutet, die zur Aufnahme und Lagerung eines Endes 11a der Rotorwelle 13 dient. Die Montageelemente 26 ragen in Richtung A von der Scheibe 25 ab. Mit Hilfe der Montageelemente 26 wird der Lagerbock 15 mit dem ersten Ende 11a des Stators 11 wiederlösbar verbunden.

Figur 2 und 3 zeigen den Stator 11 des Elektromotors 6 mit einer Schutzvorrichtung 14 gemäß einer ersten Ausführungsform. In Figur 2 ist der Elektromotor 6 mit der Schutzvorrichtung 14 gemäß der ersten Ausführungsform in einem montierten (d.h. zusammengebauten) Zustand gezeigt.

In Figur 3 ist der Elektromotor 6 mit der Schutzvorrichtung 14 gemäß der ersten Ausführungsform in einem demontierten (d.h. auseinander gebauten) Zustand gezeigt.

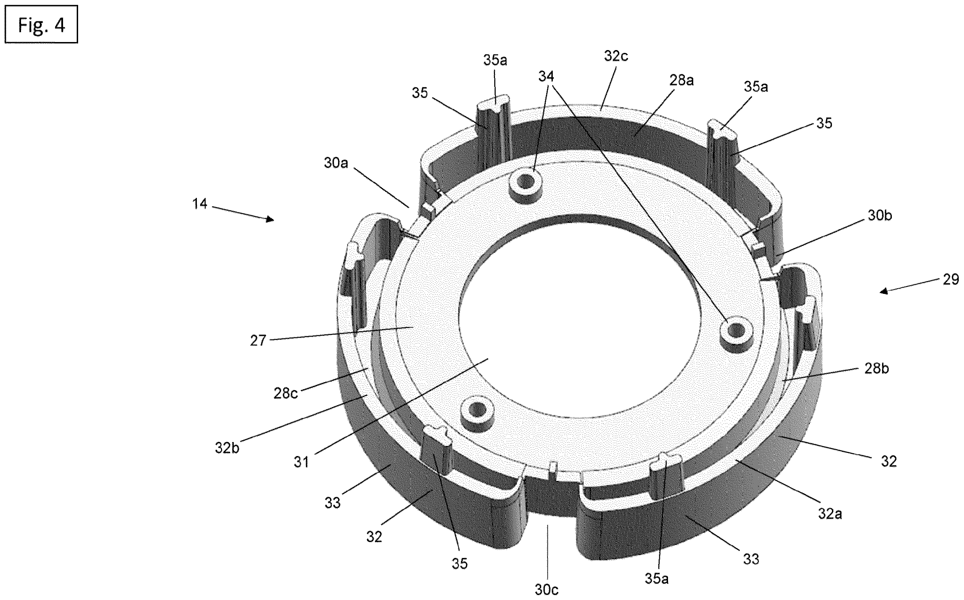

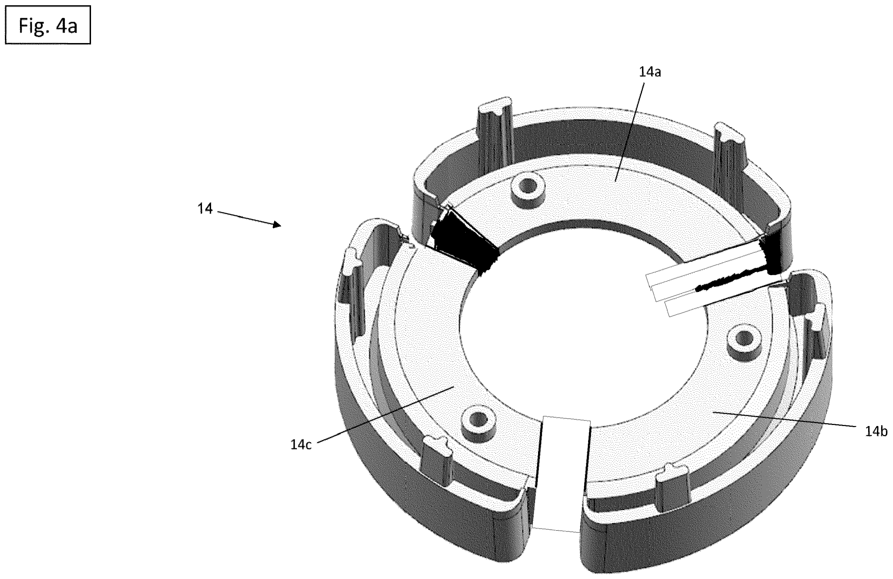

Wie insbesondere in Figur 4 gezeigt, enthält die Schutzvorrichtung 14 gemäß der ersten Ausführungsform im Wesentlichen ein ringförmiges Trägerelement 27, eine erste, zweite und dritte Einbuchtung 28a, 28b, 28c, eine Verbindungseinrichtung 29 sowie eine erste, zweite und dritte axiale Aussparung 30a, 30b, 30c. Die Schutzvorrichtung 14 ist derartig ausgestaltet, dass diese wiederlösbar mit dem ersten Ende 11a des Stators 11 verbunden werden kann.

Das ringförmiges Trägerelement 27 enthält eine kreisförmige zentrale Aussparung 31, die im montierten Zustand um das erste Ende 11a des Stators 11 positioniert ist.

Die erste, zweite und dritte Einbuchtung 28a, 28b, 28c sind im Wesentlichen bogenförmig ausgestaltet und ringförmig an einer äußeren Mantelfläche 32 des Trägerelements 27 angeordnet. Jede der Einbuchtungen 28a, 28b, 28c ist taschenförmig mit einer äußeren Seitenwand 33 ausgestaltet. Die Höhe HS der Seitenwand 33 überragt dabei in Richtung A das Trägerelement 27. Die taschenförmigen Einbuchtungen 28a, 28b, 28c dienen dazu, die Klemmelemente 24 verbunden mit einem Wickeldrahtende 23 sowie eine flüssige Isoliermasse aufzunehmen und zu Halten.

Anstelle der Isoliermasse kann auch ein flüssiger Klebstoff in die Einbuchtung eingeführt werden.

Weder die Isoliermasse noch der Klebstoff sind in den Figuren dargestellt.

Jede Einbuchtung 28a, 28b, 28c ist so ausgestaltet, dass vier Klemmelemente 24 mit den Wickeldrahtenden 23 aufgenommen werden können und zusätzlich wenigstens so viel Isoliermasse in die Einbuchtung 28a, 28b, 28c eingebracht werden kann, dass jedes Klemmelement 24 mit dem Wickeldrahtende 23 von der Isoliermasse ummantelt und dadurch isoliert werden kann.

Die Verbindungseinrichtung 29 gemäß der ersten Ausführungsform ist in dem vorliegenden Ausführungsbeispiel durch drei Hülsen 34 mit jeweils einer zentralen Aussparung sowie durch sechs Verbindungsstege 35 verwirklicht. Wie in Figur 4 gezeigt sind die Verbindungsstege 35 ungefähr in gleichmäßigen Abständen zueinander an der äußeren Seitenwand 33 angeordnet.

Alternativ können auch mehr oder weniger als drei Hülsen 34 und/oder mehr oder weniger sechs Verbindungsstege 35 vorhanden sein. Durch die Hülsen 34 werden Schrauben zum Befestigen der Schutzvorrichtung mit dem ersten Ende 11a des Stators 11 getrieben. Die Schrauben sind in den Figuren nicht gezeigt.

Mit Hilfe der Verbindungsstege wird die Schutzvorrichtung 14 mit dem ersten Ende 11a des Stator 11 verklemmt.

Jede axiale Aussparung 31 dient zum Aufnehmen und Halten des Lagerbocks 15. Die drei Montageelemente 26 des Lagerbocks 15 sind dabei in den korrespondierend ausgestalteten Aussparungen 31 positioniert.

In Figur 4a ist eine Schutzvorrichtung 14 gemäß einer weiteren Ausführungsform gezeigt. Diese Schutzvorrichtung 14 ist in drei gleichmäßigen, kreisbogenförmigen Teilen 14a, 14b, 14c ausgestaltet, die an dem ersten Ende 11a des Stators 11 positioniert sind.

Gemäß einer weiteren Ausführungsform kann die Schutzvorrichtung 14 auch in mehr oder weniger als drei gleichmäßigen, kreisbogenförmigen Teilen 14a, 14b, 14c ausgestaltet sein.

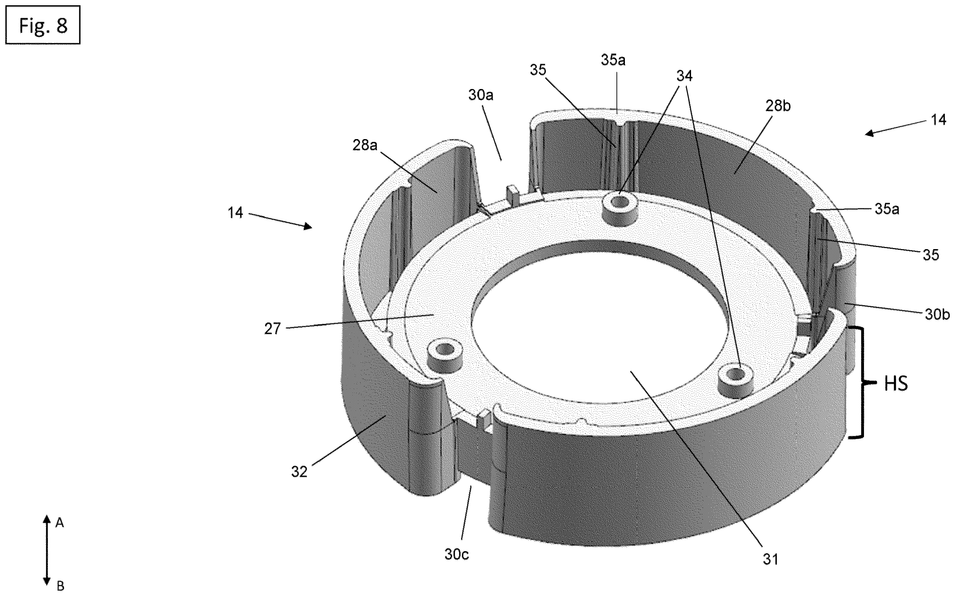

Figur 8 zeigt eine Schutzvorrichtung 14 gemäß einer zweiten Ausführungsform. Die Schutzvorrichtung 14 gemäß der zweiten Ausführungsform unterscheidet sich von der Schutzvorrichtung 14 gemäß der ersten Ausführungsform dadurch, dass die äußere Mantelflächen 32 der taschenförmigen Einbuchtungen 28a, 28b, 28c höher sind.

Mit anderen Worten: die Höhe HS der äußeren Mantelflächen 32 der Schutzvorrichtung 14 gemäß der zweiten Ausführungsform ist größer als die Höhe HS der äußeren Mantelflächen 32 der Schutzvorrichtung 14 gemäß der ersten Ausführungsform.

Die höheren Mantelflächen 32 dienen zum Vergrößern des Volumens der taschenförmigen Einbuchtungen 28a, 28b, 28c, wodurch ein größeres Volumen an Isoliermasse in jede Einbuchtung 28a, 28b, 28c eingeführt und eine höhere Isolierwirkung für das Wickeldrahtende 23 erzeugt werden kann.

Darüber hinaus sind bei der Schutzvorrichtung 14 gemäß der zweiten Ausführungsform die Verbindungsstege 35 integraler Bestandteil der äußeren Mantelfläche 32 der taschenförmigen Einbuchtungen 28a, 28b, 28c. Wie in Figur 4 gezeigt ragen bei der Schutzvorrichtung 14 gemäß der ersten Ausführungsform die Verbindungsstege 35 in Richtung A über die obere Kante 32a der äußeren Mantelflächen 32 der Einbuchtungen 28a, 28b, 28c hinaus. Im Gegensatz dazu enden bei der Schutzvorrichtung 14 gemäß der zweiten Ausführungsform die oberen Enden 35a der Verbindungsstege 35 auf Höhe der oberen Kante 32a der äußeren Mantelflächen 32 der Einbuchtungen 28a, 28b, 28c.

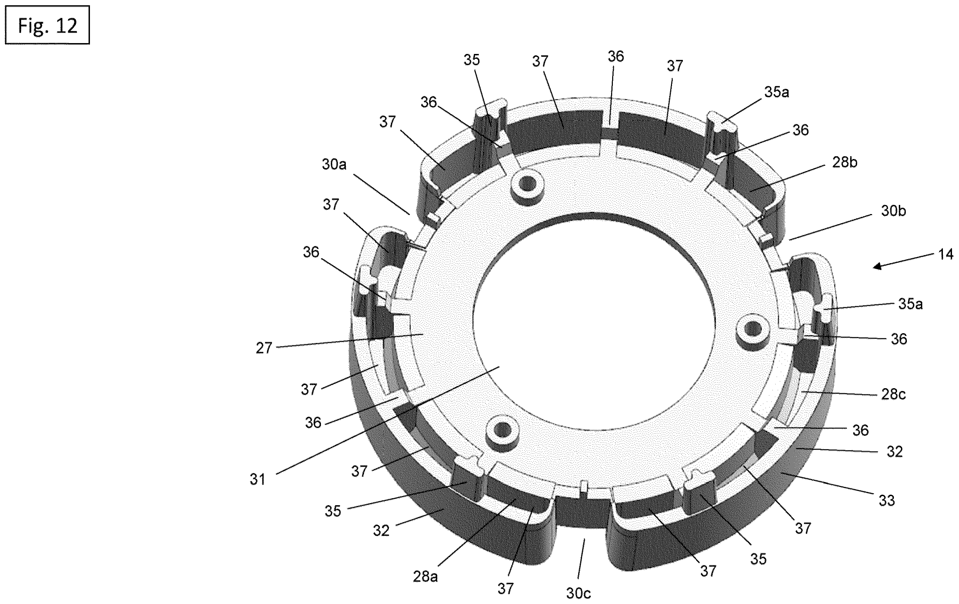

Figur 12 zeigt eine Schutzvorrichtung 14 gemäß einer dritten Ausführungsform Die Schutzvorrichtung 14 gemäß der dritten Ausführungsform unterscheidet sich von der Schutzvorrichtung 14 gemäß der ersten Ausführungsform dadurch, dass jede taschenförmige Einbuchtung 28a, 28b, 28c drei gleichmäßig beabstandet angeordnete Trennelemente 36 zum Erzeugen von vier Kammern 37 aufweist. Die vier Kammern 37 weisen dabei im Wesentlichen gleich große Volumen auf.

Des Weiteren ist das Volumen jeder Kammer 37 wenigstens genauso groß wie das Volumen eines Klemmelements 24 mit einem Ende 23 eines Wickeldrahts 21. Hierdurch kann das Klemmelement 24 mit dem Wickeldrahtende 23 in eine Kammer 37 aufgenommen werden.

Gemäß einer bevorzugten Ausführungsform ist das Volumen einer Kammer 37 etwas größer als das Volumen eines Klemmelements 24 mit einem Wickeldrahtende 23, sodass in ausreichendem Masse eine Isoliermasse zusätzlich zu dem Klemmelement 24 mit dem Wickeldrahtende 23 in die Kammer 37 eingeführt werden. Es muss dabei wenigstens so viel Isoliermasse in die Kammer 37 eingeführt werden, dass das Klemmelement mit dem Wickeldrahtende 23 vollständig von der Isoliermasse umschlossen ist.

Es ist gemäß einer alternativen Ausführungsform außerdem möglich, dass mehr oder weniger als drei Trennelemente 36 in jeder taschenförmigen Einbuchtung 28a, 28b, 28c vorhanden sind, sodass dementsprechend mehr oder weniger als vier Kammern 24 erzeugt werden.

### Bezugszeichenliste:

- 1: Werkzeugmaschine
- 2: Gehäuse
- 3: Handgriff
- 3a: Betätigungsschalter
- 4: Werkzeugaufnahme
- 5: Energieversorgung
- 6: Elektromotor
- 7: Getriebeeinrichtung
- 8: Steuerungseinheit
- 9: Abtriebswelle
- 11: Stator
- 11a: erstes Ende des Stators
- 11b: zweites Ende des Stators
- 12: Rotor
- 13: Rotorwelle
- 14: Schutzvorrichtung
- 14a: kreisbogenförmiger Teil der Schutzvorrichtung
- 14b: kreisbogenförmiger Teil der Schutzvorrichtung
- 14c: kreisbogenförmiger Teil der Schutzvorrichtung
- 15: Lagerbock
- 16: Statorblechpaket
- 17: Wickelstütze
- 18: Spule
- 19: Verschaltring
- 20: Polzahn
- 21: Wickeldraht
- 23: Ende eines Wickeldrahts
- 24: Klemmelement
- 25: kreisrunde Scheibe des Lagerbocks
- 25a: Vertiefung
- 26: Montageelement
- 27: Trägerelement
- 28a: erste Einbuchtung
- 28b: zweite Einbuchtung
- 28c: dritte Einbuchtung
- 29: Verbindungseinrichtung
- 30a: erste axiale Aussparung
- 30b: zweite axiale Aussparung
- 30c: dritte axiale Aussparung
- 31: kreisförmige zentrale Aussparung
- 32: äußere Mantelfläche
- 32a: obere Kante der äußeren Mantelfläche der Einbuchtungen
- 33: Seitenwand
- 34: Hülse
- 35: Verbindungssteg
- 35a: oberes Ende des Verbindungsstegs
- 36: Trennelement
- 37: Kammer
- HS: Höhe der Seitenwand

## Patentansprüche

1. Stator (11), insbesondere für einen Elektromotor (6), enthaltend ein Statorblechpaket (16) und Spulen (18) mit einzelnen Drahtenden (23),
**gekennzeichnet durch** eine Schutzvorrichtung (14), die in radialer Anordnung um die Drahtenden (23) mit einem ersten Ende (11a) des Stators (11) verbindbar ist.

2. Stator (11) nach Anspruch 1,
**dadurch gekennzeichnet, dass** die Schutzvorrichtung (14) mehrteilig ausgestaltet ist.

3. Stator (11) nach Anspruch 1 oder 2,
**dadurch gekennzeichnet, dass** die Schutzvorrichtung (14) wenigstens eine taschenförmige Einbuchtung (28a, 28b, 28c) zum Aufnehmen der Drahtenden (23) enthält.

4. Stator (11) nach wenigstens einem der Ansprüche 1 bis 3,
**dadurch gekennzeichnet, dass** die Schutzvorrichtung (14) eine Verbindungseinrichtung (29) zum wiederlösbaren Verbinden der Schutzvorrichtung (14) mit dem ersten Ende (11a) des Stators (11) enthält.

5. Stator (11) nach wenigstens einem der Ansprüche 1 bis 4,
**dadurch gekennzeichnet, dass** die Schutzvorrichtung (14) wenigstens eine axiale Aussparung (30a. 30b, 30c) enthält zum Aufnehmen und Halten eines Lagerbocks (15).

6. Stator (11) nach wenigstens einem der Ansprüche 1 bis 5,
**dadurch gekennzeichnet, dass** die Einbuchtung (28a, 28b, 28c) mehrteilig ausgestaltet ist.

7. Elektromotor (1) mit einem Stator (11) nach wenigstens einem der Ansprüche 1 bis 6.

8. Werkzeugmaschine (1) mit einem Stator (11) nach wenigstens einem der Ansprüche 1 bis 6.
